# EUROPÄISCHE PATENTSCHRIFT

(11) **EP 0 417 480 B1**
(45) Veröffentlichungstag und Bekanntmachung des Hinweises auf die Patenterteilung: **18.01.1995**
(21) Anmeldenummer: 90115354.4
(22) Anmeldetag: 10.08.1990
(51) Int. Cl.: H02G 3/00, B60R 16/02

(54) **Verkabelungssystem für Fahrzeuge**
Wiring system for vehicles
Système de câblage pour véhicules

(30) Priorität: 09.09.1989 DE 3930153
(43) Veröffentlichungstag der Anmeldung: 20.03.1991
(73) Patentinhaber: KABEL RHEYDT Aktiengesellschaft, D-41179 Mönchengladbach (DE)
(72) Erfinder: Hildebrandt, Hans-Georg, Dr., W-5600 Wuppertal 12 (DE)
(74) Vertreter: Mende, Eberhard, Dipl.-Ing.

(56) Entgegenhaltungen:
- EP-A- 0 031 400
- EP-A- 0 273 526
- FR-A- 2 626 116
- GB-A- 2 167 885
- US-A- 3 697 767
- US-A- 4 122 357
- PATENT ABSTRACTS OF JAPAN, vol. 9, no. 194 (M-403)(1917) 10. August 1985, & JP-A-60 60 050

## Beschreibung

Die Erfindung betrifft ein Verkabelungssystem nach dem Oberbegriff des Anspruchs 1.

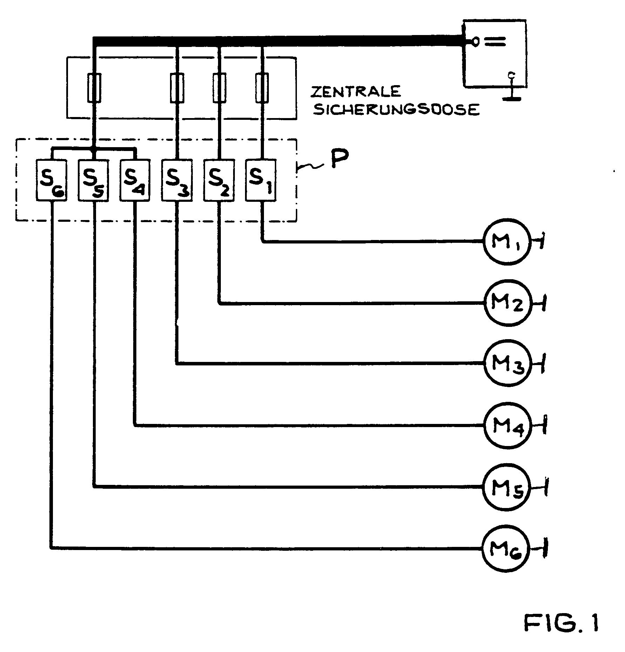

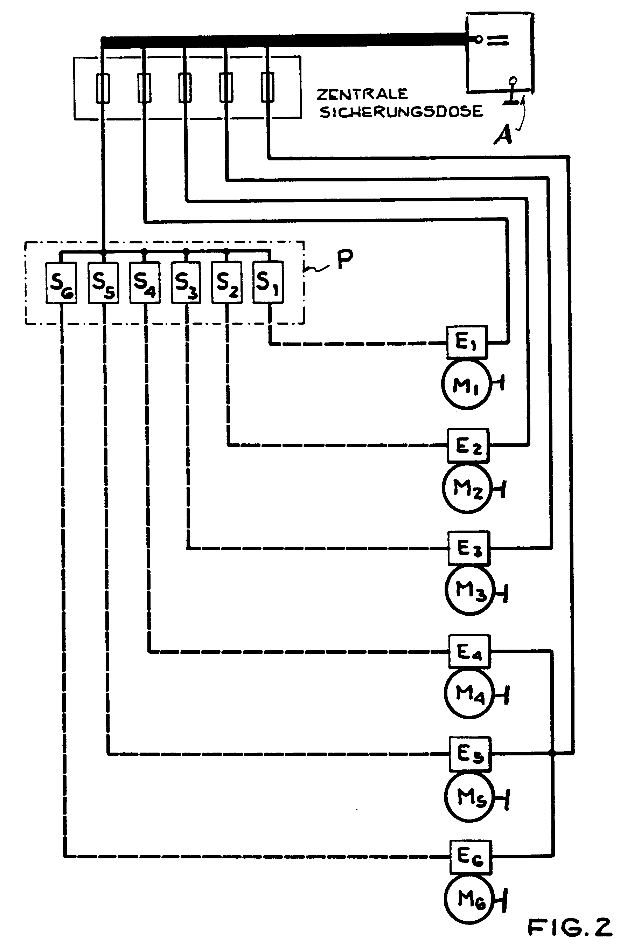

Bekannt ist die in Kraftfahrzeugen übliche Verdrahtung, bei der über Schalter, die sich im Pult P befinden, Aktoren geschaltet werden. Die Energieversorgung wird dabei direkt geschaltet (Fig.1). Eine Weiterentwicklung ist folgende: Man trennt die Energieleitungen von den Steuerleitungen (s. Fig.2). Das führt dazu, daß man zu jedem Aktor M jeweils eine Energieleitung verlegt oder gegebenenfalls alle mit einer gemeinsamen Energieschiene verbindet. Das ist nur eine Frage der Absicherung, die hier nicht betrachtet wird.

Zusätzlich werden jetzt zu jedem Aktor Steuerleitungen gezogen, die mit Schaltern S betätigt werden, die sich im Pult P befinden. Ein entsprechender elektrischer Schalter, ein Relais oder ein Halbleiterschalter E1 schaltet am Aktor M1 die Lastleitung. Das entspricht einer Fernbedienung des Schalters E1, der sich am Aktor M1 befindet. Hierfür ist eine größere Anzahl von Leitungen erforderlich; in dem dargestellten Fall sogar die doppelte Anzahl, weil man jeweils eine Steuerleitung und eine Energieleitung benötigt (Vgl. US-A-3 697 767).

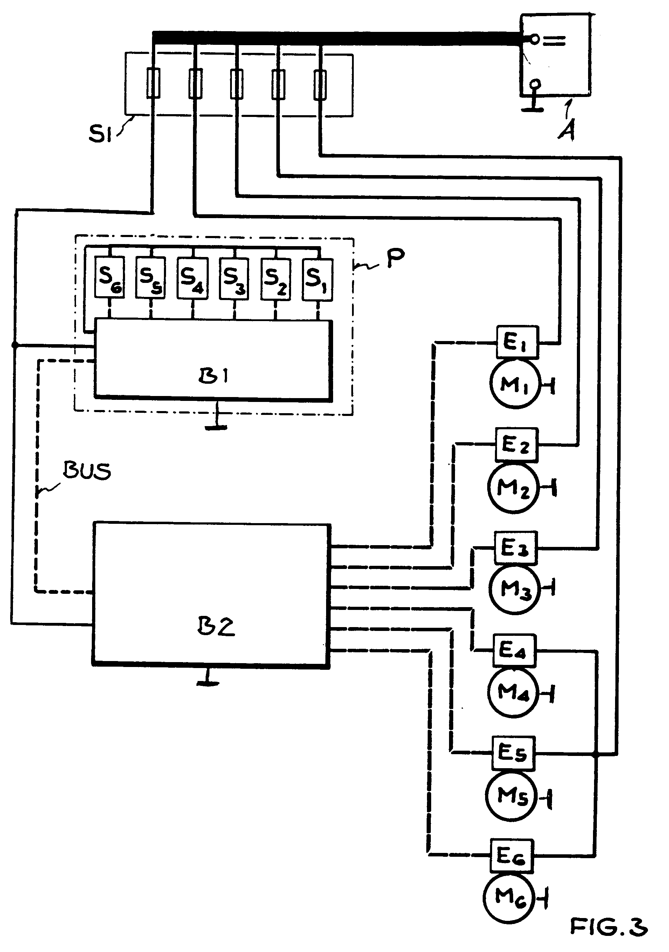

Im Falle eines Multiplex- oder Bussystems behält man das Verfahren bei, überträgt jedoch die Steuerinformationen nicht mehr über jeweils eine einzelne Zuleitung zu den Schaltern E an den Aktoren M, sondern überträgt sie in serieller Form auf einer gemeinsamen Verbindungsleitung, der Busleitung, an die alle BUS-Bausteine B angeschlossen sind. Die BUS-Bausteine haben die Aufgabe, die Vielzahl der zu übertragenden Steuersignale für die serielle Übertragung auf einem Signalweg zu codieren und zu decodieren. Hierbei bleibt die Anzahl der Lastleitungen weiterhin gleich; für die Datenübertragung ist lediglich eine einzige Leitung erforderlich (Fig.3).

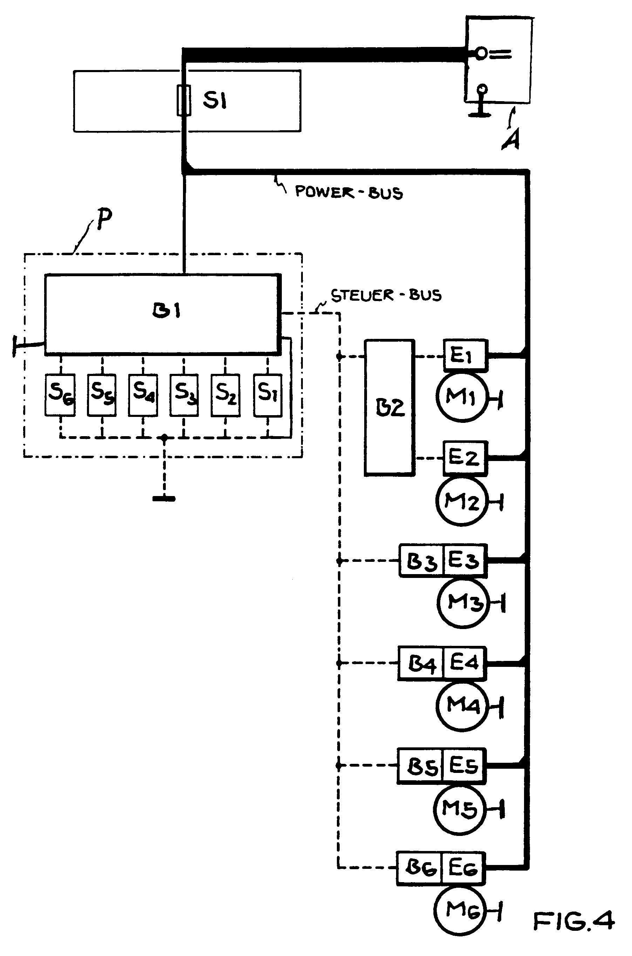

Derzeit befindet sich in Fahrzeugen vorwiegend eine Version, die einer herkömmlichen Verdrahtung nach Fig.1 mit geschalteten Lastleitungen entspricht, zumindest im Normalfall. Von einem gewissen Aufwand an Leitungen für zusätzliche Sensoren, Schalter und Verbraucher ist diese Lösung nicht mehr wirtschaftlich und man gelangt zu dem ebenfalls bekannten Fall, daß bei dem bloß eine Steuer-Doppel-Leitung vorhanden ist (s. Fig.4). Wenn man eine Anordnung hat, bei der sich programmierbare Module am Ende der Steuerleitungen befinden, dann ist es weiter bekannt, daß man in der Nutzung dieser Steuerung eigentlich völlig frei ist. Man kann sogar während der Fertigung, z.B. in einem letzten Schritt, die Steuerbefehle per Programm in diese Module hineinladen und definiert damit, wie diese Leitung verwendet wird.

Eine Besonderheit ist das Sicherungsproblem. Man muß dafür sorgen, daß jede elektrische Zuleitung abgesichert ist. Figur 4 zeigt ein elektronisches Bussystem mit programmierbaren Bus-Modulen B, Sicherungen Si und Leistungsschaltern E. Es gibt eine gemeinsame Energieversorgungsleitung, einen sog. Energieversorgungsbus. An diesen Bus sind jeweils die elektronischen Schalter E1, die sich an den Aktoren M1 befinden, angeschlossen. Diese elektronischen Schalter sind so ausgeführt, daß sie elektronische Sicherungen beinhalten und somit eine zentrale Absicherung von einzelnen Leitungen nicht mehr erforderlich ist. Die elektronischen Schalter E und die Bedienschalter S im Pult P sind jeweils an BUS-Module B angeschlossen, die alle über den Steuer-BUS miteinander kommunizieren.

Es ist eine Energieleitung vorgesehen, die man natürlich entsprechend stark dimensionieren muß. Der Steuerbus ist wie in der vorhergehenden Figur als eine Leitung ausgeführt, an die alle Schalter S an den Aktoren M angeschlossen sind. Die Übertragung auf diesen Steuerbus erfolgt in serieller Form, also in Bus- oder Multiplexform. Die Fig. 4 zeigt, daß die elektronischen Schalter E₁ und E₂ der Aktoren M1 und M2 beispielsweise von dem gemeinsamen BUS-Modul B2 gesteuert werden, während die elektronischen Schalter E3 ... E6 jeweils eigene BUS-Module B3 ... B6 besitzen. In der Fig. 4 ist nur die Übertragung von Steuersignaien vom Pult P zu den Aktoren M dargestellt. Es ist üblich, die BUS-Module B so auszulegen, daß über nur einen Steuer-BUS Signale in beiden Richtungen übertragen werden können (Vgl. FR-A-2 626 116).

Bei einem Bus- oder Multiplex-System, das mit sehr wenigen Leitungen für die Übertragung auskommt, ist es wirtschaftlich, zusätzliche Trennstellen einzubringen, wenn diese - aus Gründen der Service-Erleichterung - erwünscht sind. Wenn also z.B. eine Trennstelle vorhanden ist, an der 40 Leitungen getrennt werden müssen, hat man 40 Steckverbindungen; wenn eine derartige Trennstelle für die gleiche Anzahl von Funktionen innerhalb eines Bus-Systems existiert, hat man z.B. nur 4 Leitungen nötig, d.h. man hat also damit eine Einsparung von Steckverbindungen. Dieses ist eine Eigenschaft der Bus- oder Multiplex-Systeme schlechthin.

Die bisher im Kraftfahrzeug verwirklichten Systeme beruhen auf einer festen Verdrahtung. Bei Weiterentwicklungen oder bei Vollausstattung einer Fahrzeug-Klasse werden im Gegensatz zur Standard- oder Grundausrüstung stets neue Kabelbäume verlegt. Das hat den Nachteil, daß für fast jeden Typ ein spezieller Kabelsatz vom Lager abgerufen werden muß. Ansatzweise wurden auch Bussysteme eingesetzt, aber auch hier müssen im Vergleich zur Grundausrüstung Änderungen im Kabelsatz bzw. der Verlegung von Kabeln vorgenommen werden.

Der Erfindung liegt die Aufgabe zugrunde, einen Kabelsatz anzugeben, der für alle Ausstattungsvarianten und auch ohne Bussystem verwendbar ist.

Diese Aufgabe wird durch die im Kennzeichen aufgeführten Merkmale gelöst. Weiterbildungen der Erfindung sind in den Unteransprüchen enthalten.

Wenn aus fertigungstechnischen Gründen eine Trennstelle in einem Kabel vorgesehen ist, dann muß man sämtliche Leitungen, die z.B. zur Tür eines Pkw gehen, in sog. Übergabepunkten auftrennen und über einen Mehrfachstecker führen. Eine Einsparung bezüglich des Steckers hat man dann, wenn durch Einsatz von Bussystemen nur noch wenige Leitungen nötig sind. In dem Fall ghen nur zwei Datenleitungen über die Trennstelle und als Minimum nur eine Schiene zur Energieversorgung. Die Rückleitung geschieht durch eine Masseverbindung zur Karosserie (s. Fig.4).

Die Erfindung wird nachstehend anhand der Zeichnung näher erläutert. Dabei zeigt:
- Fig.5: schematisch einen in einem Pkw verlegten Kabelbaum,
- Fig.6: die Verdrahtung in der Grundausstattung eines Pkw,
- Fig.7: die Erweiterung der Grundausstattung und
- Fig.8: das Prinzipschaltbild eines Steckmoduls.

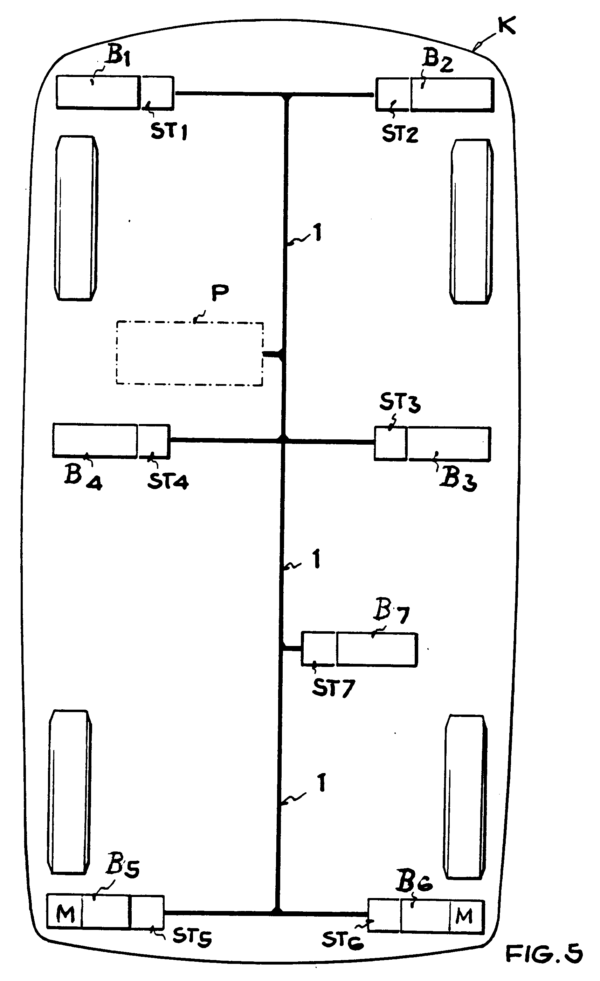

Ein Beispiel für die Verkabelung in einem Kraftfahrzeug zeigt die Fig.5. Über einen Kabelbaum 1 werden über Stecker ST Verbraucher M oder Module B verbunden. Das Bedienpult P ist zentral vor dem Fahrer angeordnet. In den meisten Fällen dient die Karosserie K als Rückleitung für die einzelnen Stromkreise, die den speziellen Funktionen, die durch Schalter ausgelöst werden sollen, zugeordnet sind.

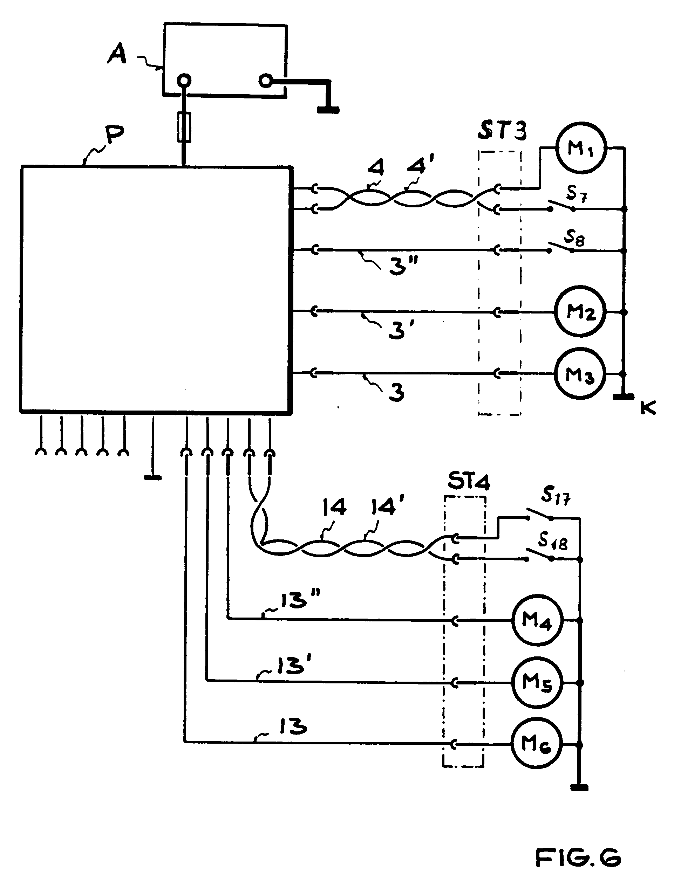

Ausgehend von dem in Fig.6 dargestellten Fall von 5 direktgeschalteten Funktionen (Schalter oder Sensoren S7 ... S18 und Verbrauchern oder Aktoren M1 ... M13) hätte man für jeden Zweig des Kabelbaums bei einer Erweiterung der Zahl der Funktionen noch fünf Leitungen aufzutrennen. Damit gibt es nur fünf Steckverbindungen anstatt 50, wenn man 50 Funktionen zu installieren hat. Bei der Erweiterung auf 50 Funktionen wird ein Modul B3 dazwischengeschaltet, welches über den Stecker ST3 mit einem Zweig des Kabelbaums, d.h. mit den Leitungen 4, 4′, 3, 3′, 3˝, verbunden ist und auf der anderen Seite 50 Verbindungsleitungen für Sensoren und Aktoren aufweist. Es ergibt sich eine Einsparung, die eine Eigenschaft des Bus- oder Multiplex-Systems ist. Grundsätzlich werden z.B. bis zu den Punkten ST3 und ST4 (s. Fig.5 und Fig.6) zehn Leitungen verlegt. Diese zehn Leitungen sind fester Bestandteil des Fahrzeuges, und damit können mit der herkömmlichen Methode der direkten Schaltung der Lastleitungen zehn Aktoren und Sensoren ein- und ausgeschaltet werden, was für die Serienausstattung ausreichend ist.

Bei einer bevorzugten Ausführungsform der Erfindung wird ein Bussystem eingesetzt (für Mehrfunktionen), das über die in einer Grundausstattung ohne Bussystem vorhandenen beispielsweise zehn Leitungen mit einer Zehner-Steckverbindung eine Vielzahl von Funktionen (bis über 50 oder 100) entsprechend schalten kann, wenn eine komfortablere Fahrzeugausstattung über mehr Funktionen verfügen soll. Es gibt dabei zwei Möglichkeiten, einen Kabelsatz zu definieren:
Möglichkeit A beispielsweise erlaubt, eine hinreichende Anzahl mit direkten Schaltern und Lastleitungen zu übertragen und die Variante B, durch Einsatz zusätzlicher Module an den Enden des Kabelsatzes beliebige, auch programmierbare Mehrfachausnutzung dieses Kabelsatzes zu realisieren. Das sind beispielsweise bis zu 100 Funktionen.

Die Erfindung gestattet es, diese Mehrfachausnutzung des Kabelsatzes für jede denkbare Zusatzfunktion mit minimalem zusätzlichen Aufwand zu realisieren.

Ein wesentlicher Gedanke der Erfindung ist, daß ein fester Kabelsatz bis zum definierten Übergabepunkt, z.B. ans Pult P oder an die Batterie, fest verlegt ist. An diesen Übergabepunkten bzw. Trennstellen ST werden in der Grundversion Kabel angeschlossen, die direkt zu den entsprechenden Aktoren und Sensoren führen. Im Fall von Zusatzfunktionen wird jeweils am Übergabepunkt ein Modul angeschlossen, der seinerseits, eine größere Anzahl von Aktoren und Sensoren ausgangsseitig verbinden kann. Die zu den von diesem Übergabepunkt versorgten Aktoren führenden Energieleitungen werden zu einer Energieschiene für alle - d.h. auch die zusätzlichen-Aktoren zusammengefaßt.

Wichtig ist, daß man die Sicherung dann auch hinter dieser Trennstelle hat, weil diese individuell ausgelegt sein muß, d.h. man kann sie nicht von vornherein in ihrer Ansprechschwelle vorherbestimmen. In einer der Ausstattungsvarianten kommt plötzlich ein großer Energieverbraucher hinzu, und dann würde die Sicherung überlastet. Gemäß der Erfindung werden die Energieleitungen, die innerhalb des festen Kabelsatzes geführt werden, so stark ausgelegt, daß die maximale Energie, die an den Endpunkten denkbar ist, übertragen werden kann.

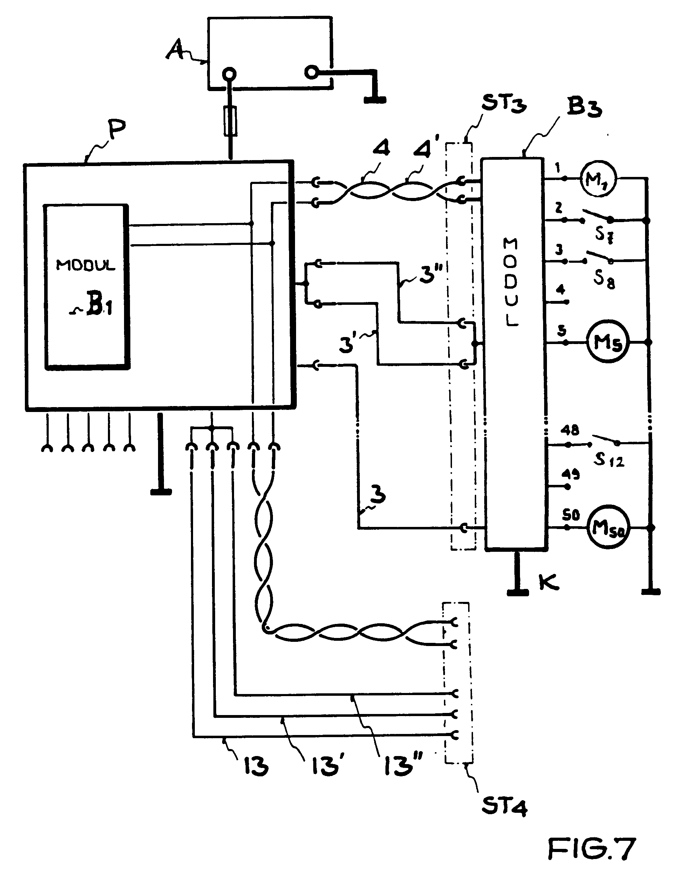

Wenn man die Fahrzeuge einer Serie mit einer komfortableren Ausstattung versieht, müssen im allgemeinen mehr Leitungen verlegt werden, um die nötigen Mehrfunktionen bedienen zu können. In Fig.7 ist die Erfindung anhand von 5 Leitungen pro Zweig beispielhaft dargestellt. Ersichtlich werden durch Einsatz von steckbaren Modulen an den Steckern ST3 und ST4 statt der durch die fünf Leitungen bedienbaren fünf Funktionen nunmehr wesentlich mehr Aktoren und Sensoren einsetzbar. An den Trennstellen hinter ST3 und ST4, die sich an den Enden des Kabelsatzes befinden, werden die Sensoren und Aktoren nicht direkt verbunden, sondern Module (beispielsweise B3 in Fig.7) dazwischengeschaltet. Zu den Modulen führen auf der einen Seite die Leitungen des festverlegten Kabelsatzes 1 mit den Leitungen 3, 3′ und 3˝ für die Energieversorgung und die Leitungen 4 und 4′ für die Ansteuerung des Moduls B3. Auf der anderen Seite der Module werden die Sensoren und Aktoren direkt angeschlossen; dabei ist beispielsweise das Anschließen von mehr als 50 Aktoren und Sensoren M1 ...M50, S7 ... S18, möglich. Das Bedienpult P ist über eine lösbare Verbindung auf der anderen Seite des Kabelsatzes ebenfalls an die fünf Leitungen angeschlossen. Im Pult P werden die als Busleitungen vorgesehenen Leitungspaare in üblicher Weise miteinander verbunden, so daß an allen vorgesehenen Stellen des Fahrzeuges ein Informationsaustausch zwischen den peripheren Modulen und den Modulen im Pult P vorgenommen werden kann.

In der Fig.7 sind zur Darstellung des Prinzips zwar nur fünf Leitungen dargestellt, davon werden zwei Leitungen als Busleitung genutzt und die drei weiteren Leitungen als Versorgungsleitung genutzt, jedoch können auch mehr als fünf Leitungen vorhanden sein. In diesem Beispiel wurden einerseits zwei Leitungen 3′ und 3˝ miteinander verbunden, sowie auf der anderen Seite zum Stecker ST4 die Leitungen 13, 13′ und 13˝. Diese Versorgungsleitungen bilden eine Energieschiene. Die Leitung 3 geht direkt zu einem Aktor (hier M50), während die beiden übrigen Leitungen 3′ und 3˝ zu einer Energieschiene zusammengefaßt sind. Zur Stromversorgung dient die Batterie A, welche einseitig mit Masse verbunden ist.

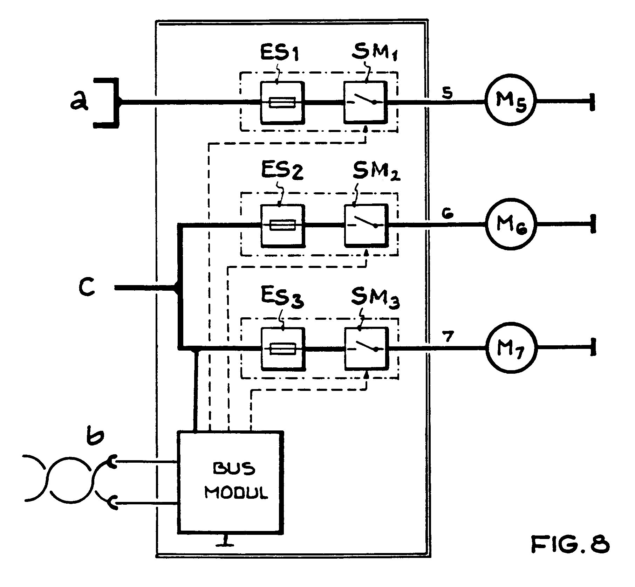

Eine etwas weiterentwickelte Art der Steckmodule ist in Fig.8 dargestellt. Die Sicherungs- und Schaltmodule SM1, SM2 und SM3 enthalten jeweils eine elektronische Sicherung (ES1, ES2, sowie ES3) sowie elektrische Schalter S1 bis S3. Der Busmodul steuert die elektrischen Schalter an und verbindet die Aktoren M mit der Versorgungsspannung, welche über die Energieschiene a oder c zugeführt wird.

Der Vorteil dieser Technik besteht darin, daß statt mehreren hundert Kabelsatz-Varianten für ein Pkw-Modell nur noch ein Standardkabelsatz verwendet werden muß. Für die einfachste Pkw-Ausstattung ist bei dieser Schaltungstechnik kein hochwertiges Bussystem nötig.

## Patentansprüche

1. Verkabelungssystem für Fahrzeuge mit einem Kabelsatz mit Kabeln und/oder Kabelbäumen mit einer festen Zahl von Leitungen, welche im Fahrzeug verlegt sind, an deren Enden lösbare Verbindungen oder Übergabepunkte für den Anschluß von Baugruppen oder Funktionselementen vorgesehen sind,
**dadurch gekennzeichnet**, daß ein Kabelsatz (1) für eine Grundausstattung, mit dem eine feste Zahl von Grundfunktionen ausführbar ist, auch für Zusatzfunktionen vorgesehen ist, indem bei dem Kabelsatz (1, für die Grundausstattung Leitungen vorgesehen sind, die zu fest vorgegebenen Übergabepunkten zwischen Steckern ST und Modulen B im Fahrzeug führen und im wesentlichen für direktgeschaltete Stromkreise vorgesehen sind, und die beim Einbau von zusätzlichen Funktionselementen für eine Nutzung als Steuer- bzw. Energieversorgungsleitungen dergestalt vorbereitet sind, daß die Energieversorgungsleitungen (3, 3′ , 3˝) für die Energieübertragung derart überdimensioniert sind, daß der maximale, vorhersehbare Energiebedarf für zusätzliche Baugruppen oder Funktionselemente an den Übergabepunkten gesichert ist, daß für die Nutzung von Leitungen als Energieversorgungsleitungen (3, 3′, 3˝) oder Steuerleitungen (4, 4′) im wesentlichen nur bereits genutzte Leitungen der Grundausstattung verwendet sind, und daß die Steuerleitungen als Bus-Leitungen für die Informationsübertrag bereits in der Grundausstattung vorgesehen sind, welche eine Vervielfachung der ausführbaren Funktionen ermöglichen.

2. Verkabelungssystem nach Anspruch 1, dadurch gekennzeichnet, daß die Leitungen, welche als Steuerleitungen (4, 4′) vorgesehen sind, abgeschirmt und/oder verdrillt sind.

3. Verkabelungssystem nach Anspruch 1 dadurch gekennzeichnet, daß weitere Steuerleitungen (14, 14′) vorgesehen sind.

4. Verkabelungssystem nach Anspruch 1, dadurch gekennzeichnet, daß als Steuerleitung eine optische Ader vorgesehen ist.

5. Verkabelungssystem nach einem der Ansprüche 1 bis 4, dadurch gekennzeichnet, daß vorzugsweise 5 bis 16 Übergabepunkte vorgesehen sind.

6. Verkabelungssystem nach einem der Ansprüche 1 bis 5, dadurch gekennzeichnet, daß Leitungen (3, 3′, 3˝) aus dem für die Grundfunktionen verwendbaren Kabelsatz (1) für die Zusatzfunktionen entsprechend der für den jeweiligen Verbraucher benötigten Stromstärke zusammengefaßt sind.

## Claims

1. Cabling system for vehicles with a cable set with cables and/or cable harnesses with a fixed number of lines which are laid in the vehicle and at whose ends detachable connections or interconnection points for the connection of assemblies or functional elements are provided, characterized in that a cable set (1) for basic equipment, with which set (1) a fixed number of basic functions can be carried out, is also provided for supplementary functions in that, in the cable set (1) for the basic equipment, lines are provided which lead to permanently prescribed interconnection points between plugs ST and modules B in the vehicle and are provided essentially for directly connected circuits, and are prepared during installation of additional functional elements for use as control lines or power supply lines such that the power supply lines (3, 3′, 3˝) are overdimensioned for power transmission such that the maximum power requirement which can be predicted for additional assemblies or functional elements is ensured at the interconnection points, in that essentially only lines of the basic equipment which are already in use are used as power supply lines (3, 3′, 3˝) or control lines (4, 4′), and in that the control lines are provided as bus lines for the transmission of information even in the basic equipment and permit the functions which can be carried out to be multiplied.

2. Cabling system according to Claim 1, characterized in that the lines which are provided as control lines (4, 4′) are screened and/or twisted.

3. Cabling system according to Claim 1, characterized in that further control lines (14, 14′) are provided.

4. Cabling system according to Claim 1, characterized in that an optical waveguide is provided as control line.

5. Cabling system according to one of Claims 1 to 4, characterized in that preferably 5 to 16 interconnection points are provided.

6. Cabling system according to one of Claims 1 to 5, characterized in that lines (3, 3′, 3˝) from the cable set (1) which can be used for the basic functions are combined for the supplementary functions in accordance with the strength of current required for the respective load.

## Revendications

1. Système de câblage pour véhicules, comportant un faisceau de câbles avec des câbles et/ou des harnais de câbles d'un nombre fixe de lignes qui sont posées dans le véhicule et aux extrémités desquelles des liaisons amovibles ou des points de transfert sont prévus pour le raccordement de modules ou d'éléments de fonction,
caractérisé par le fait qu'est prévu, même pour des fonctions supplémentaires, un faisceau de câbles (1) pour équipement de base, avec lequel on peut assurer un nombre fixe de fonctions de base, en ce sens que, dans le faisceau de câbles (1) prévu pour l'équipement de base, sont prévues des lignes qui, dans le véhicule vont jusqu'à des points de transfert prescrits de façon fixe, entre des connecteurs ST et des modules B et sont essentiellement prévues pour des circuits directement mis en circuit et qui, lors du montage d'éléments fonctionnels supplémentaires, sont préparées, pour une utilisation sous forme de lignes de commande ou de lignes d'alimentation en énergie, de façon telle que les lignes d'alimentation en énergie (3, 3′, 3˝) pour la transmission de l'énergie sont surdimensionnées de façon que soit assuré aux points de transfert le besoin maximal prévisible en énergie pour des modules ou des éléments de fonction supplémentaires, par le fait que pour l'utilisation des lignes en tant que lignes d'alimentation en énergie (3, 3′, 3˝) ou lignes de commande (4, 4′), on n'emploie essentiellement que des lignes de l'équipement de base déjà utilisées, et par le fait que les lignes de commande sont déjà prévues dans l'équipement de base sous forme de lignes de bus pour la transmission de l'information permettant une multiplication des fonctions que l'on peut assurer.

2. Système de câblage selon la revendication 1, caractérisé par le fait que les lignes qui sont prévues en tant que lignes de commande (4, 4′) sont blindées et/ou torsadées.

3. Système de câblage selon la revendication 1, caractérisé par le fait que d'autres lignes de commande (14, 14′) sont prévues.

4. Système de câblage selon la revendication 1, caractérisé par le fait que comme ligne de commande est prévu un conducteur optique.

5. Système de câblage selon l'une des revendications 1 à 4, caractérisé par le fait que de préférence 5 à 16 points de transfert sont prévus.

6. Système de câblage selon l'une des revendications 1 à 5, caractérisé par le fait que des lignes (3, 3′, 3˝) provenant du faisceau de câbles (1) utilisable pour les fonctions de base sont regroupées pour les fonctions supplémentaires en fonction de l'intensité du courant nécessaire pour les récepteurs respectifs.
